# EUROPEAN PATENT SPECIFICATION

(11) **EP 3 445 707 B1**
(45) Date of publication and mention of the grant of the patent: **27.05.2020**
(21) Application number: 17785540.0
(22) Date of filing: 18.04.2017
(51) Int. Cl.: B68C 3/00

(54) **HORSE-RIDING STIRRUP, MANUFACTURING METHOD**
STEIGBÜGEL UND VERFAHREN ZUR HERSTELLUNG
ÉTRIER D'ÉQUITATION ET PROCÉDÉ DE FABRICATION

(30) Priority: 22.04.2016 IT UA20162841
(43) Date of publication of application: 27.02.2019
(73) Proprietor: AMAHORSE TRADING S.R.L., 06016 San Giustino (PG) (IT)
(72) Inventor: BENETTI, Mauro, 25017 Lonato del Garda (Brescia) (IT)
(74) Representative: Chimini, Francesco
(86) International application number: PCT/IB2017/052205
(87) International publication number: WO 2017/182941

(56) References cited:
- DE-U- 7 119 888
- DE-U1-202010 000 928
- GB-A- 709 097

## Description

The present invention relates to a horse-riding stirrup and an assembly method of a stirrup.

Horse-riding stirrups of various types are known, which, hanging from corresponding stirrup leathers along the flanks of the horse, make it possible to control the animal in performing various horse-riding disciplines. See e.g. DE202010000928 U1.

The assembly of conventional stirrups involves a number of extremely laborious operations. In addition, some types of stirrups are greatly weakened in their structure during assembly.

The present invention therefore falls into the foregoing context, proposing to provide a riding stirrup and a method of assembly able to overcome the above mentioned disadvantages, and in particular able to provide a stirrup which can be assembled with geometrical couplings functional to preventing weakening of the structure in use.

Such objective is achieved by a horse-riding stirrup according to claim 1, and by a method according to claim 10. The dependent claims show preferred embodiment variants.

The object of the present invention will now be described in detail, with the help of the appended drawings, wherein:
- figures 1 and 2 show front views of a stirrup, the subject of the present invention, according to one possible embodiment, where the safety arm is respectively placed in the coupling configuration and in the release configuration;
- figures 3 and 4 show a stirrup frame according to a possible variant, in perspective and in plan view, where all the other components have been omitted;

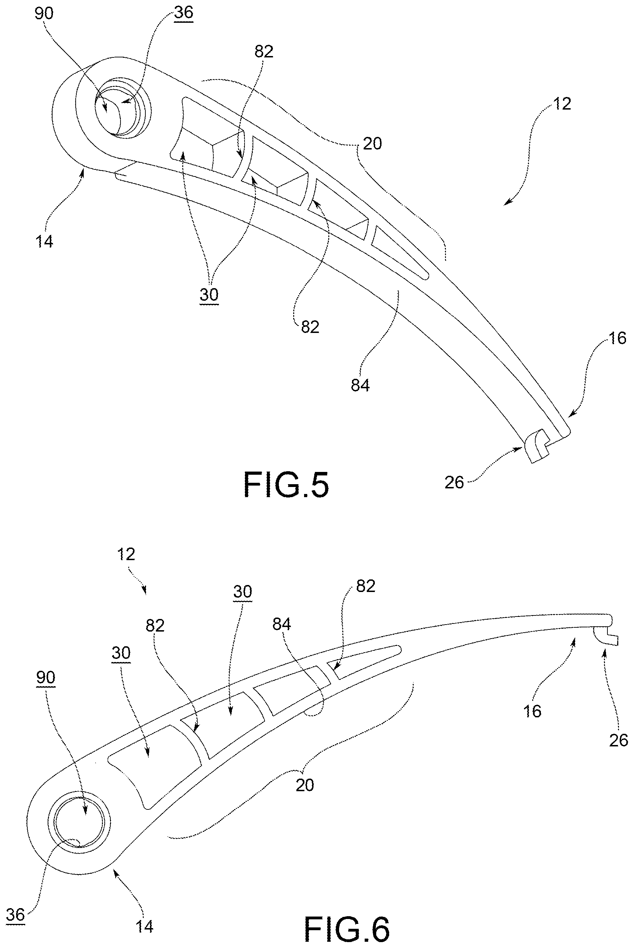

- figures 5 and 6 represent a safety arm according to the variant in figure 1, in a perspective and plan view;
- figures 7A and 7B illustrate a perspective and a plan view from below of a support element according to one embodiment;

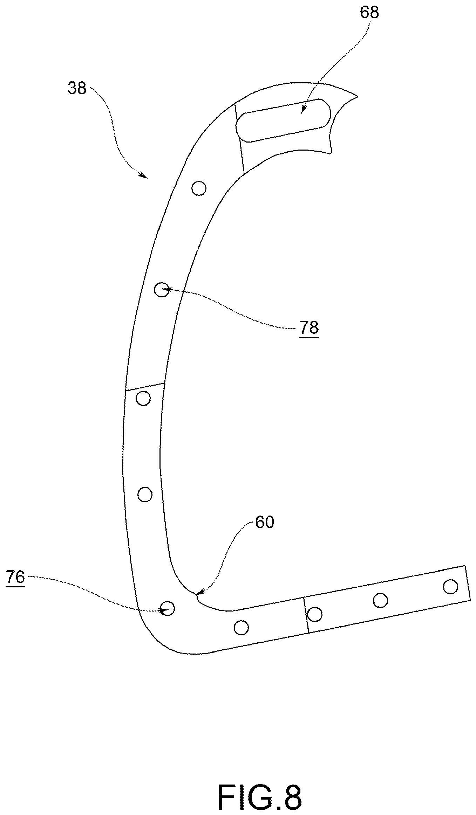

- figure 8 shows a plan view of a reinforcement core according to one embodiment, for example shown by the dotted line in figure 2;
- figures 9 and 10 show schematic figures in plan and lateral views of a covering sheet, preferably metallic, attached to the support element according to a possible variant.

With reference to the aforementioned drawings, reference numeral 1 globally denotes a horse-riding stirrup.

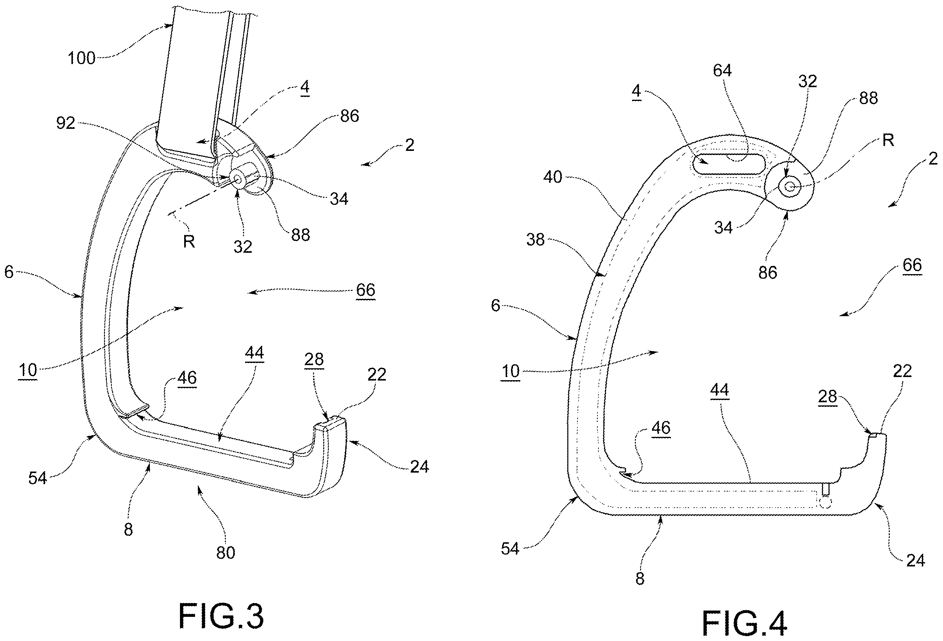

Such stirrup 1 comprises a stirrup frame 2 which comprises a hooking portion 4 to a stirrup leather 100 (for example schematically shown in figure 3), a first side arm 6 and a support arm 8 connected to each other in an incident manner to define a frame compartment 10 engageable (to be specific, which can be traversed) by a user/rider's foot;

According to a preferred variant, the first side arm 6 and the support arm 8 are integrally joined, substantially in a permanent manner.

According to a preferred further variant, the first side arm 6 and the support arm 8 are made in one piece, at least partially of the same material.

With reference to the variant in figure 4, the stirrup frame 2 delimits a frame opening 66 at the side opposite the first side arm 6 where, going into more detail, the first side arm 6 and the support arm 8 are mutually separated.

The stirrup frame 2 could therefore have a single first side arm 6 connecting the hooking portion 4 and the support arm 8. For example, such frame could have a general "C" or "L" shape.

In the embodiment shown, the hooking portion 4 comprises or consists of at least one hole or slot that crosses at least partly (for example completely) the thickness of the stirrup frame 2.

According to one embodiment, an upper edge 64 delimiting the hole or slot of the hooking portion 4 on one side is tilted with respect to a horizontal plane and/or relative to the support arm 8, specifically to enable a better balancing of the stirrup 1 in relation to the stirrup leather 100.

Preferably, the stirrup frame 2 is made mainly or completely of a polymer material.

According to the invention, the stirrup frame 2 comprises a reinforcement core 38, preferably metallic, to which a polymeric material 40 is co-moulded or over-moulded.

According to a further embodiment not shown, the reinforcement core 38 is only partly incorporated in the polymeric material 40, so that it emerges in part from said material.

According to a further embodiment, the reinforcement core 38 is entirely incorporated in the polymeric material 40. In this regard, such core 38 may delimit a plurality of anchorage openings 78 (e.g. circular) configured to permit the receipt of polymeric material inside them, and thus ensure better adhesion of the co-moulded or over-moulded material to the reinforcement core 38.

According to the invention, the reinforcement core 38 extends from the hooking portion 4 along the first 6 side arm and along at least part of the support arm 8.

Advantageously, the reinforcement core makes at least part of the hooking portion 4, specifically surrounding at least partially the aforesaid hole or slot, or delimiting a core hole or slot 68 having a lumen at least partially aligned with the lumen of the hole or slot of the hooking portion 4.

According to the invention, the stirrup 1 comprises at least a bench or support element 42 for the user's foot, mounted on the support arm 8 and shape-coupled with an element seat 44 of said arm 8.

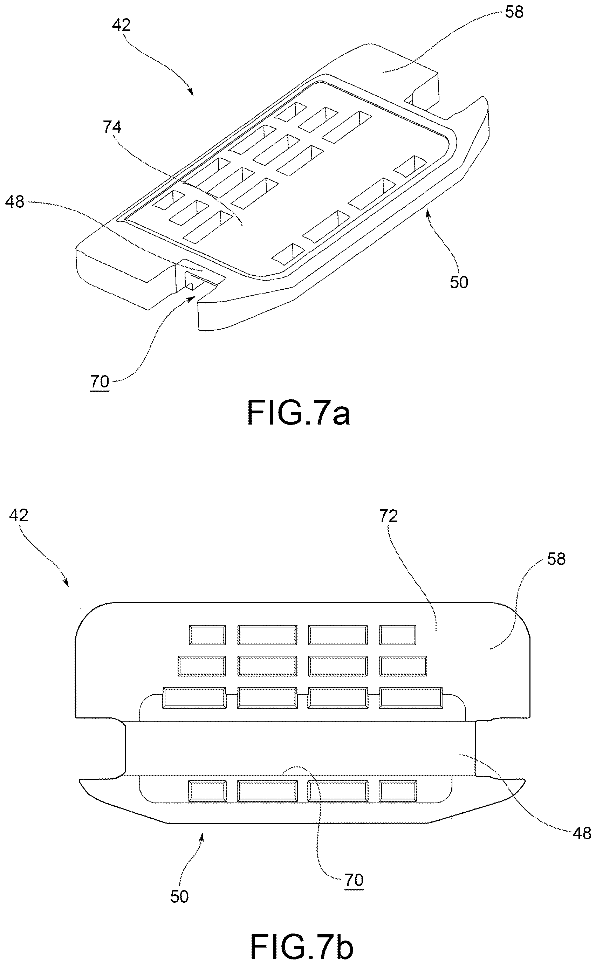

With reference to figure 7 for example, the support element 42 could delimit a longitudinal groove 70 receiving at least part of the support arm 8.

Advantageously, the element seat 44 (e.g. lowered), receives at least a portion of the support element 42.

Preferably the longitudinal groove 70 crosses at least partly (for example completely) the support element 42.

Advantageously, the longitudinal groove 70 is accessible from a lower surface 72 of the support element 42, facing the side opposite a support surface 74 of the user's foot, delimited by said element 42.

The element seat 44 is delimited by an undercut portion 46 in which a portion 48 (for example a tapered portion) of the support element 42 is wedged on one side.

For example, said portion 48 could be housed in the undercut portion 46, after which the support element 42 could be rotated relative to the support arm 8 to occupy the element seat 44 and, more specifically, to accommodate the remaining part of the support arm 8 inside the longitudinal groove 70.

Another portion 50 (for example an opposite portion to the optionally tapered portion 48) of the support element 42 is instead constrained to the support arm 8 using one or more mechanical fastenings 52 which extend through the thickness of the stirrup frame 2.

For example, the mechanical fastenings 52 could comprise one or more screws.

Advantageously, the mechanical fastenings 52 extend through the thickness of the support arm in a direction approximately parallel to the support surface 74 of the support element 42.

Preferably, the mechanical fastenings 52 are arranged at a distance from a connection zone 54 between the first side arm 6 and the support arm 8, for example at an end portion 24 or intermediate portion 80 of the support arm 8.

According to a further advantageous variant, the undercut portion 46 is arranged in the connection zone 54 between the first side arm 6 and the support arm 8. According to this embodiment, the connection zone 54 is therefore preferably devoid of mechanical fastenings which cross the thickness of the aforesaid frame 2, to avoid weakening the mechanical strength of such zone, where the greatest mechanical stresses of the user on the stirrup 1 are concentrated.

According to the invention, the reinforcement core 38 could comprise at least one lug 60 (in the case in point projecting towards the frame compartment 10) which delimits in part the undercut portion 46 and which realizes an abutment surface to prevent the disengagement of the support element.

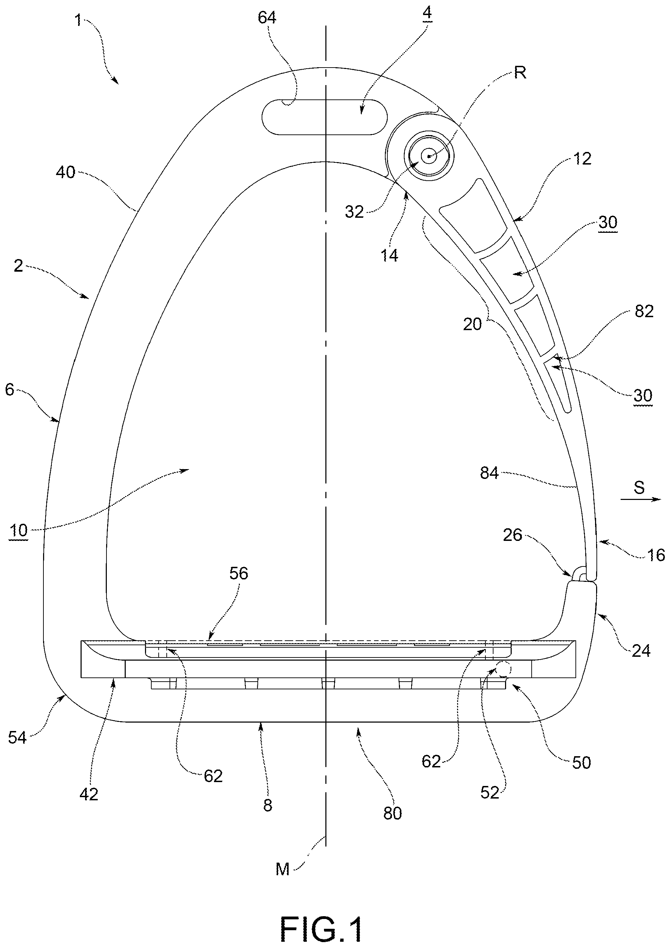

According to a variant only schematically shown in figure 1, the support element 42 may be partially covered by a covering sheet 56, preferably metallic. For example, the covering sheet 56 could be at least partially made of steel.

Optionally, the covering sheet 56 could be perforated through its thickness, or could comprise one or more slits 76, preferably oriented along the support arm 8.

According to one embodiment, the covering sheet 56 comprises coupling portions 62, bent outwards (that is, outside the plane which the sheet extends in) which, according to a further variant, could be at least partly incorporated in a polymer material 58 which the aforesaid support element 42 is at least partly made of.

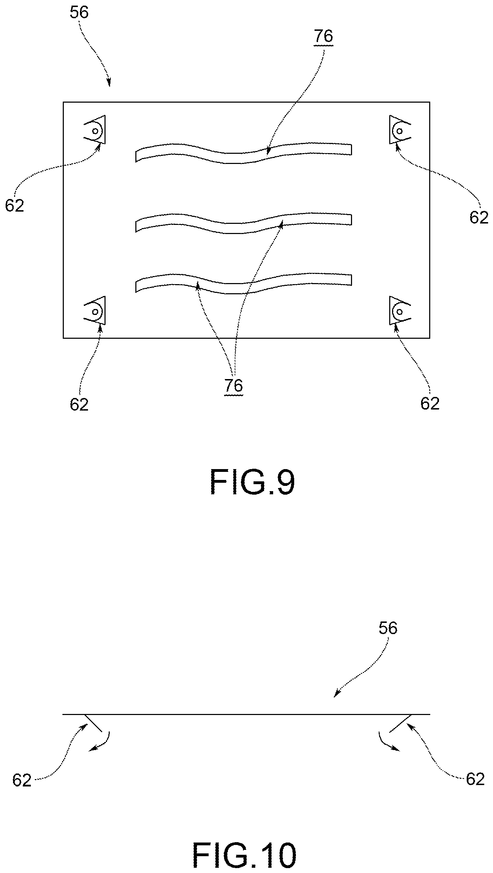

Advantageously, the coupling portions 62 are cut from the cover sheet 56 itself (e.g. by die-cutting), and then bent towards the outside of the sheet as described above and as shown in figure 10.

The stirrup 1 preferably comprises a second side arm 12 or safety arm, comprising an articulation end 14 pivoted to the stirrup frame 2 about an axis of rotation R, and a free end 16 rotatable between a hooking configuration to the support arm 8 and a release configuration of such arm 8.

To such purpose, the stirrup frame 2 delimits a rotation pin 32 around the aforesaid axis R which is preferably housed in the thickness of the frame 2.

More precisely, the rotation pin 32 is positioned at a support appendage 86, thinner than the thickness of the stirrup frame 2.

Advantageously, such support appendage 86 delimits a sliding track 88 for the second side arm, which preferably extends annularly around the pin 32.

In the embodiments shown, a centreline plane M is detectable through the stirrup frame 2 between the first 6 and the second side arm 12, when the latter is in the hooking configuration.

Preferably, the axis of rotation R of the second side arm 12 is substantially parallel (and preferably non-coincidental) to the centreline plane M.

According to a further variant, the axis of rotation R is placed at the hooking portion 4, shifted towards the second arm 12, specifically outside the centreline plane M.

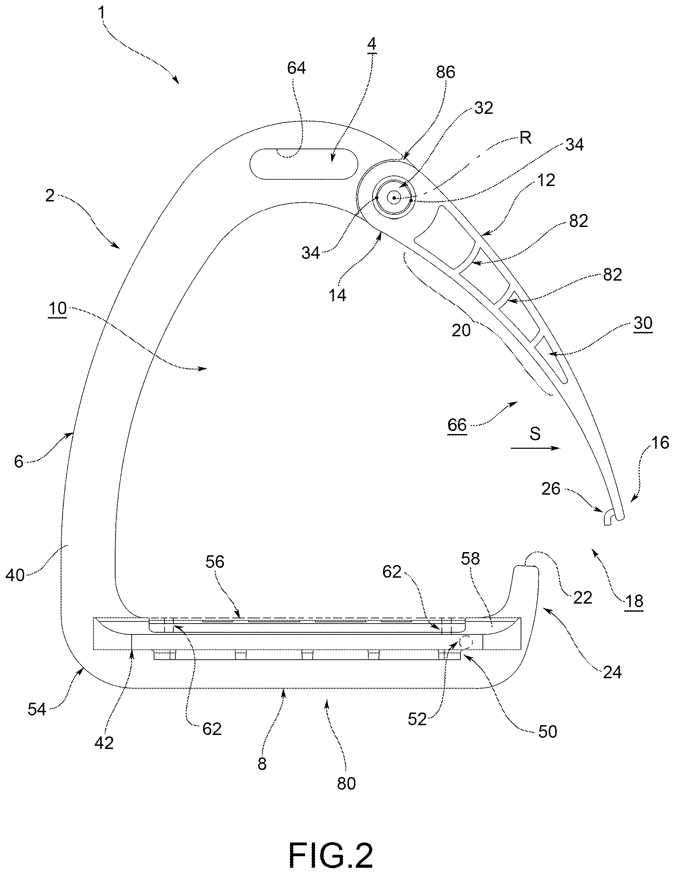

For the variants which provide for a safety arm, in the hooking configuration (for example as schematised in figure 1) the second side arm 12 encloses the frame compartment 10 with the first side arm 6 and the support arm 8. Conversely, in the release configuration shown in Figure 2, the second arm 12 is distanced from the support arm 8 to create a side disengagement opening 18 of the user's foot from the aforesaid frame compartment 10.

In the case in point, in the release configuration the free end 16 of the second side arm 12 is distanced from the support arm 8 to create the aforesaid opening 18.

According to a preferred embodiment, the free end 16 of the second side arm 12 and an end portion 24 of the support arm 8 comprise complementary fastening means 26, 28 which cooperate with each other - as a result of a shape and/or force coupling - in the coupling configuration.

In the variants shown, the complementary fastening means comprise a substantially hooked portion 26 placed at the free end 16 (and preferably facing inwards towards the first side arm 6), and a corresponding recess 28 delimited by the support arm 8.

Advantageously, said recess is facing the frame compartment 10.

According to a variant of the invention, the second side arm 12 comprises at least one flexible portion 20.

According to one embodiment, the second side arm 12 is made mainly or solely of an elastomer material, which makes the flexible portion 20.

According to a further embodiment, between the articulated end 14 and the free end 16, the second side arm 12 delimits one or more structural lightening portions 30 which form the flexible portion.

In the variants shown, the structural lightening portions 30 are shown in the form of a recess extending partially or completely through the thickness of the second side arm 12.

According to a preferred variant, at least one pair of adjacent structural lightening portions 30 may be separated by a separation rib 82.

According to an advantageous embodiment, the flexibility of the flexible portion 20 is adjustable by selecting a higher/lower density distribution of the aforesaid lightening holes 30 along the respective arm 12.

In the coupling configuration, the flexible portion 20 preferably presses the free end 16 against the support arm 8.

This way the portion 20 makes the free end 16 exert a thrust on the support arm 8.

Conversely, to reach the release configuration, the flexible portion 20 advantageously allows the second side arm 12 to bend partially to (preferably: snap) release the free end 16 from the support arm 8, thus creating the side disengagement opening 18.

For example, the movement of the second side arm 12 between the aforesaid configurations may occur as a result of a solicitation on said arm 12 in a direction S opposite to the first side arm 6, towards the outside of the frame compartment 10.

The flexible portion 20 - when provided - thus exercises a fundamental function in all configurations, as it actively contributes to the maintenance of the hooking configuration and reactively permits the release of the second side arm 12 from the support arm 8.

According to a preferred variant, in the hooking configuration, the flexible portion 20 the second side arm 12 is pressed (or compressed) between the axis of rotation R of said arm, and a contact surface 22 identified by the support arm 8.

For example, the contact surface 22 may circumscribe partly (for example above) the recess 28 delimited by the support arm 8.

According to one embodiment, in the hooking configuration the second side arm 12 is curved, in particular with its concave surface 84 facing the frame compartment 10.

According to this variant, the flexible portion 20 allows the second arm 12 to temporarily reduce its radius of curvature to release the free end 16 from contact with the support arm 8.

The articulation end 14 of the second side arm 12 is preferably fitted on the rotation pin 32. In the case in point, the articulation end 14 delimits a substantially circular cavity 90, preferably through, embracing the rotation pin 32.

According to a variation not shown, at a free pin end 92 of the rotation pin 32 a mechanical means (e.g. a screw and/or a plate) could be attached to axially hold the second side arm 12 of the stirrup frame 2.

In the embodiments shown, the pin 32 delimits at least one radial projection 34 (or radial cavity) which in the hooking configuration is inserted in at least one radial cavity 36 (or which houses a radial projection) of the articulation end 14 so that the second side arm 12 reaches discrete hooking and release configurations.

The aforementioned objectives are also achieved by a method of assembly of a horse-riding stirrup 1, according to any one of 1 to 9.

Said method comprises the steps of:
- providing a stirrup frame 2 which comprises a hooking portion 4 to a stirrup leather 100, a first side arm 6 and a support arm 8 connected to each other in an incident manner to define a frame compartment 10 engageable by a user's foot;
- providing a support element 42 for the user's foot;
- fitting the support element 42 to the support arm 8 and shape-coupling said element 42 with an element seat 44 of the aforesaid arm 8, where the element seat 44 is delimited by an undercut portion 46;
- wedging on one side an optionally tapered portion 48 of the support element 42 into the undercut portion 46;
- for example by rotating the support element 42, constraining another portion 50 of said element 42 to the support arm 8 by means of one or more mechanical fastenings 52 which extend through the thickness of the stirrup frame 2.

According to a preferred variant, the step of providing the support element 42 comprises a sub-step of providing a metal covering sheet 56 comprising hooking portions 62, folded outwardly, and a sub-step of incorporating at least part of the hooking portions 62 in a polymer material 58 which said support element 42 is at least partially made of.

According to a further preferred embodiment, the sub-step of providing the metal covering sheet 56 comprises steps of cutting said hooking portions 62 from said covering sheet 56, and folding said portions 62 towards the outside of the sheet.

Optionally, said method comprises further steps of:
- providing a second side arm 12 comprising an articulation end 14 and a free end 16;
- pivoting the articulation end 14 to the stirrup frame 2 about an axis of rotation R, so that the free end 16 is rotatable between a hooking configuration to the support arm 8 in which the second arm 12 encloses the frame compartment 10 with the first side arm 6 and the support arm 8, and a release configuration of the latter in which the second arm 12 is spaced from the support arm 8 to create a lateral disengagement opening 18 of the user's foot from the aforesaid compartment 10.

Innovatively, the stirrup and the method described make it possible to achieve the objectives set.

In particular, said stirrup and method have been designed with rational geometric couplings to facilitate quick assembly of the stirrup.

The safety arm makes it possible to liberate an additional access to the stirrup compartment so as to allow an easier release of the user's foot.

Advantageously, the stirrup of the present invention is constructively simple, and therefore economical to produce with repetitive and automated operations.

Advantageously, the stirrup of the present invention allows for very precise fine tuning adjustments.

Advantageously, the stirrup of the present invention has been designed to snap open and to be reassembled in the hooking configuration from the release configuration to be used again.

Advantageously, the stirrup of the present invention comprises the second side arm which is held firmly in the hooking configuration and which allows the foot to be firmly held at least on a par with conventional stirrups.

Advantageously, the stirrup of the present invention makes it possible to adjust the flexibility of the second arm in a targeted and precise manner.

Advantageously, through appropriate selection of the structural lightening portions, and therefore in a manner of little invasiveness, the stirrup of the present invention makes it possible to design a range of products for different users, for example of different weights.

Advantageously, the stirrup of the present invention has been conceived to be assembled without weakening the major structural components.

Advantageously, the stirrup of the present invention has high mechanical resistance.

Advantageously, the stirrup of the present invention is extremely light.

Advantageously, the stirrup of the present invention permits a good balance with respect to the stirrup leathers, despite being an asymmetrical component in relation to a central plane.

Advantageously, the presence of a non-slip element improves the grip on the stirrup bar.

A person skilled in the art may make variations or replacements of elements with others functionally equivalent to the aforementioned embodiments of the stirrup and of the method so as to satisfy specific requirements.

Such variants are also contained within the scope of protection as defined by the following claims.

In addition, each variant described as belonging to a possible embodiment may be realised independently of the other embodiments described.

## Claims

1. Horse-riding stirrup (1) comprising:
- a stirrup frame (2) which comprises a hooking portion (4) to a stirrup leather (100), a first side arm (6) and a support arm (8) connected to each other in an incident manner to define a frame compartment (10) engageable by a user's foot;
- a support element (42) for the user's foot, fitted to the support arm (8) and shape-coupled with an element seat (44) of said arm;
wherein the element seat (44) is delimited by an undercut portion (46) which an optionally tapered portion (48) of the support element (42) is wedged into one side, another portion (50) of said element (42) being constrained to the support arm (8) by means of one or more mechanical fastenings (52), for example comprising one or more screws, which extend through the thickness of the stirrup frame (2);
the stirrup (1) being **characterised by** the fact that the stirrup frame comprises a reinforcement core (38), preferably metallic, to which a polymer material (40) is co-moulded or over-moulded, said reinforcement core (30)extending from the hooking portion (4) along the first side arm (6) and along at least part of the support arm (8), and by the fact that said reinforcement core (38) comprises at least one lug (60) projecting towards the frame compartment (10) which delimits in part the undercut portion (46) and which makes an abutment surface to prevent the disengagement of the support element (42).

2. Stirrup according to the preceding claim, wherein the stirrup frame (2) has a general "C" or "L", shape, said frame (2) having a single first side arm (6) which connects the hooking portion (4) and the support arm (8).

3. Stirrup according to any of the preceding claims, wherein the undercut portion (46) is placed in a connection zone (54) between the first side arm (6) and the support arm (8), said zone (54) being free of mechanical fastenings passing through the thickness of said frame (2) to prevent weakening its mechanical strength.

4. Stirrup according to any of the preceding claims, wherein the stirrup frame (2) is made mainly or completely of a polymer material.

5. Stirrup according to any of the preceding claims, wherein the support element (42) delimits, for example underneath, a longitudinal groove (70) which receives at least part of the support arm (8).

6. Stirrup according to any of the preceding claims, wherein the support element (42) is partially covered by a metal covering sheet (56), for example of steel, hooking portions (62) folded outwards of said sheet (56) being at least partially embedded in a polymer material (58) which said support element (42) is at least partially made of.

7. Stirrup according to any of the preceding claims, comprising a second side arm (12) comprising an articulation end (14) pivoted to the stirrup frame (2) about an axis of rotation (R), and a free end (16) rotatable between a hooking configuration to the support arm (8) in which the second arm (12) encloses the frame compartment (10) with the first side arm (6) and the support arm (8), and a release configuration of the latter, in which said second arm (12) is spaced from the support arm (8) to create a lateral disengagement opening (18) of the user's foot from said compartment.

8. Stirrup according to the preceding claim, wherein the second side arm (12) comprises at least one flexible portion (20) which in the coupling configuration presses the free end (16) in abutment with the support arm (8) and which, in order to achieve the release configuration, allows the second side arm (12) to bend in part, to snap-disengage the free end (16) from the support arm (8), for example as a result of a stress in a direction (S) opposite the first side arm (6).

9. Stirrup according to any of the preceding claims when dependent on claim 7, wherein a centreline plane (M) is detectable through the stirrup frame (2) between the first (6) and the second (12) side arm in the hooking configuration, the axis of rotation (R) being located at the hooking portion (4), shifted towards said second arm (12) outside said plane (M).

10. A method of assembling a stirrup (1) for horse-riding according to any of the preceding claims, comprising the steps of:
- providing a stirrup frame (2) which comprises a hooking portion (4) to a stirrup leather (100), a first side arm (6) and a support arm (8) connected to each other in an incident manner to define a frame compartment (10) engageable by a user's foot;
- providing a support element (42) for the user's foot;
- fitting the support element (42) to the support arm (8) and shape-coupling said element (42) with an element seat (44) of said arm, the element seat (44) being delimited by an undercut portion (46);
- wedging on one side an optionally tapered portion (48) of the support element (42) in the undercut portion (46);
- constraining another portion (50) of said element (42) to the support arm (8) by means of one or more mechanical fastenings (52), for example comprising one or more screws, which extend through the thickness of the stirrup frame (2) .

11. Method according to the preceding claim, wherein the step of providing the support element (42) comprises a sub-step of providing a metal covering sheet (56) comprising hooking portions (62), folded outwardly, and a sub-step of incorporating at least part of the hooking portions (62) in a polymer material (58) which said support element (42) is at least partially made of.

12. Method according to the preceding claim, wherein the sub-step of providing the metal covering sheet (56) comprises steps of cutting said hooking portions (62) from said covering sheet (56), and folding said portions (62) towards the outside of the sheet.

13. Method according to any of the claims 10-12, comprising the steps of:
- providing a second side arm (12) comprising an articulation end (14) and a free end (16);
- pivoting the articulation end (14) to the stirrup frame (2) about an axis of rotation (R), so that the free end (16) is rotatable between a hooking configuration to the support arm (8) in which the second arm (12) encloses the frame compartment (10) with the first side arm (6) and the support arm (8), and a release configuration of the latter, in which said second arm (12) is spaced from the support arm (8) to create a lateral disengagement opening (18) of the user's foot from said compartment.

## Patentansprüche

1. Reitsteigbügel (1), umfassend:
- einen Steigbügelrahmen (2), der einen Hakenabschnitt (4) an einem Steigbügelleder (100), einen ersten Seitenarm (6) und einen Stütz- bzw. Trägerarm (8) umfasst, die auf einfallende Weise miteinander verbunden sind, um ein Rahmenfach zu definieren (10), das von dem Fuß eines Benutzers in Eingriff genommen werden kann;
- ein Stütz- bzw. Trägerelement (42) für den Fuß des Benutzers, das an den Stützarm (8) gepasst ist und mit einem Elementsitz (44) des Arms formgekoppelt ist;
wobei der Elementsitz (44) durch einen hinterschnittenen Abschnitt (46) begrenzt ist, bei dem ein optional verjüngter Abschnitt (48) des Stützelements (42) in eine Seite geklemmt ist, wobei ein anderer Abschnitt (50) des Elements (42) an den Stützarm (8) mittels eines oder mehrerer mechanischer Befestigungsmittel (52) gezwängt bzw. gehalten ist, die beispielsweise eine oder mehrere Schrauben umfassen, die sich durch die Dicke des Steigbügelrahmens (2) erstrecken;
wobei der Steigbügel (1) durch die Tatsache gekennzeichnet ist, dass der Steigbügelrahmen einen Verstärkungskern (38), vorzugsweise metallisch, umfasst, an den ein Polymermaterial (40) angeformt oder aufgeformt ist, wobei sich der Verstärkungskern (30) von dem Hakenabschnitt (4) entlang des ersten Seitenarms (6) und entlang zumindest eines Teils des Stützarms (8) erstreckt, und durch die Tatsache, dass der Verstärkungskern (38) zumindest einen Ansatz (60) umfasst, der zu dem Rahmenfach (10) hin vorspringt, das den hinterschnittenen Teil (46) teilweise begrenzt und das eine Anlage- bzw. Widerlagerfläche bildet, um das Außereingriffbringen bzw. Lösen des Stützelements (42) zu verhindern.

2. Steigbügel nach dem vorhergehenden Anspruch, wobei der Steigbügelrahmen (2) eine allgemeine "C"- oder "L"-Form aufweist, wobei der Rahmen (2) einen einzelnen ersten Seitenarm (6) aufweist, der den Hakenabschnitt (4) und den Stützarm (8) verbindet.

3. Steigbügel nach einem der vorhergehenden Ansprüche, wobei der hinterschnittene Abschnitt (46) in einer Verbindungszone (54) zwischen dem ersten Seitenarm (6) und dem Stützarm (8) platziert ist, wobei die Zone (54) frei von mechanischen Befestigungsmitteln ist, die durch die Dicke des Rahmens (2) verlaufen, um eine Schwächung seiner mechanischen Festigkeit zu verhindern.

4. Steigbügel nach einem der vorhergehenden Ansprüche, wobei der Steigbügelrahmen (2) hauptsächlich oder vollständig aus einem Polymermaterial besteht.

5. Steigbügel nach einem der vorhergehenden Ansprüche, wobei das Stützelement (42) beispielsweise darunter eine Längsnut (70) begrenzt, die zumindest einen Teil des Stützarms (8) aufnimmt.

6. Steigbügel nach einem der vorhergehenden Ansprüche, wobei das Stützelement (42) teilweise von einer Metallabdeckplatte (56), beispielsweise aus Stahl, bedeckt ist, wobei aus der Platte (56) nach außen gefaltete Hakenabschnitte (62) zumindest teilweise in ein Polymermaterial (58) eingebettet sind, aus dem das Stützelement (42) zumindest teilweise besteht.

7. Steigbügel nach einem der vorhergehenden Ansprüche, umfassend einen zweiten Seitenarm (12), der ein Gelenkende (14), das um eine Drehachse (R) an den Bügelrahmen (2) angelenkt ist, und ein freies Ende (16) umfasst, das zwischen einer Hakenkonfiguration zu dem Stützarm (8), in der der zweite Arm (12) das Rahmenfach (10) mit dem ersten Seitenarm (6) und dem Stützarm (8) umschließt, und einer Freigabekonfiguration des letzteren drehbar ist, in der der zweite Arm (12) von dem Stützarm (8) beabstandet ist, um eine laterale Löse- bzw. Außereingriffsöffnung (18) für den Fuß des Benutzers aus dem Fach zu erzeugen.

8. Steigbügel nach dem vorhergehenden Anspruch, wobei der zweite Seitenarm (12) zumindest einen flexiblen Abschnitt (20) umfasst, der in der Kopplungskonfiguration das freie Ende (16) in Anlage mit dem Stützarm (8) presst und der, um die Freigabekonfiguration zu erreichen, dem zweiten Seitenarm (12) erlaubt, sich teilweise zu biegen, um das freie Ende (16) von dem Stützarm (8) schnappmäßig außer Eingriff zu bringen bzw. zu lösen, beispielsweise aufgrund einer Spannung in einer Richtung (S) gegenüber bzw. entgegengesetzt zu dem ersten Seitenarm (6).

9. Steigbügel nach einem der vorhergehenden Ansprüche, wenn abhängig von Anspruch 7, wobei eine Mittellinienebene (M) durch den Steigbügelrahmen (2) zwischen dem ersten (6) und dem zweiten (12) Seitenarm in der Hakenkonfiguration erkennbar ist, wobei sich die Drehachse (R) an dem Hakenabschnitt (4) befindet, und zwar zu dem zweiten Arm (12) hin außerhalb der Ebene (M) verschoben.

10. Verfahren zum Montieren eines Steigbügels (1) zum Reiten nach einem der vorhergehenden Ansprüche, umfassend die Schritte:
- Bereitstellen eines Steigbügelrahmens (2), der einen Hakenabschnitt (4) an einem Steigbügelleder (100), einen ersten Seitenarm (6) und einen Stütz- bzw. Trägerarm (8) umfasst, die auf einfallende Weise miteinander verbunden sind, um ein Rahmenfach zu definieren (10), das von dem Fuß eines Benutzers in Eingriff genommen werden kann;
- Bereitstellen eines Stütz- bzw. Trägerelements (42) für den Fuß des Benutzers;
- Passen des Stützelements (42) an den Stützarm (8) und Formkoppeln des Elements (42) mit einem Elementsitz (44) des Arms, wobei der Elementsitz (44) durch einen hinterschnittenen Abschnitt (46) begrenzt ist;
- Klemmen eines optional verjüngten Abschnitts (48) des Stützelements (42) in den hinterschnittenen Abschnitt (46) auf einer Seite;
- Halten bzw. Zwängen eines anderen Abschnitts (50) des Elements (42) an dem Stützarm (8) mittels eines oder mehrerer mechanischer Befestigungsmittel (52), die beispielsweise eine oder mehrere Schrauben umfassen, die sich durch die Dicke des Steigbügelrahmens (2) erstrecken.

11. Verfahren nach dem vorhergehenden Anspruch, wobei der Schritt des Bereitstellens des Stützelements (42) einen Teilschritt des Bereitstellens einer Metallabdeckplatte (56) umfasst, die nach außen gefaltete Hakenabschnitte (62), und einen Teilschritt Schritt des Integrierens zumindest eines Teils der Hakenabschnitte (62) in ein Polymermaterial (58) umfasst, aus dem das Stützelement (42) zumindest teilweise besteht.

12. Verfahren nach dem vorhergehenden Anspruch, wobei der Teilschritt des Bereitstellens der Metallabdeckplatte (56) Schritte des Schneidens der Hakenabschnitte (62) von der Abdeckplatte (56) und des Faltens der Abschnitte (62) in Richtung nach außen der Platte umfasst.

13. Verfahren nach einem der Ansprüche 10-12, umfassend die Schritte:
- Bereitstellen eines zweiten Seitenarms (12), der ein Gelenkende (14) und ein freies Ende (16) umfasst;
- Anlenken des Gelenkendes (14) an den Steigbügelrahmen (2) um eine Drehachse (R) herum, so dass das freie Ende (16) zwischen einer Hakenkonfiguration zu dem Stützarm (8), in der der zweite Arm (12) das Rahmenfach (10) mit dem ersten Seitenarm (6) und dem Stützarm (8) umschließt, und einer Freigabekonfiguration des letzteren drehbar ist, in der der zweite Arm (12) von dem Stützarm (8) beabstandet ist, um eine laterale Löse- bzw. Außereingriffsöffnung (18) für den Fuß des Benutzers aus dem Fach zu erzeugen.

## Revendications

1. Étrier d'équitation (1) comprenant :
- un cadre d'étrier (2) qui comprend une portion d'accrochage (4) à une étrivière (100), un premier bras latéral (6) et un bras de support (8) reliés l'un à l'autre de manière incidente pour définir un compartiment de cadre (10) avec lequel peut venir en prise le pied d'un utilisateur ;
- un élément de support (42) pour le pied de l'utilisateur, ajusté sur le bras de support (8) et accouplé par correspondance de forme avec un siège d'élément (44) dudit bras ;
dans lequel le siège d'élément (44) est délimité par une portion en contre-dépouille (46) dans laquelle est calée une portion optionnellement tronconique (48) de l'élément de support (42) sur un côté, une autre portion (50) dudit élément (42) étant retenue en force sur le bras de support (8) au moyen d'une ou plusieurs pièces de fixation mécaniques (52), par exemple comprenant une ou plusieurs vis, qui s'étendent à travers l'épaisseur du cadre d'étrier (2) ;
l'étrier (1) étant **caractérisé par le fait que** le cadre d'étrier comprend un noyau de renforcement (38), de préférence métallique, sur lequel un matériau polymère (40) est co-moulé ou surmoulé, ledit noyau de renforcement (30) s'étendant à partir de la portion d'accrochage (4) le long du premier bras latéral (6) et le long d'au moins une partie du bras de support (8), et **par le fait que** ledit noyau de renforcement (38) comprend au moins une oreille (60) faisant saillie vers le compartiment de cadre (10) qui délimite en partie la portion en contre-dépouille (46) et qui forme une surface de butée pour empêcher le dégagement de l'élément de support (42).

2. Étrier selon la revendication précédente, dans lequel le cadre d'étrier (2) a une forme générale en "C" ou en "L", ledit cadre (2) ayant un seul premier bras latéral (6) qui relie la portion d'accrochage (4) et le bras de support (8).

3. Étrier selon l'une quelconque des revendications précédentes, dans lequel la portion en contre-dépouille (46) est placée dans une zone de liaison (54) entre le premier bras latéral (6) et le bras de support (8), ladite zone (54) étant exempte de pièces de fixation mécaniques traversant l'épaisseur dudit cadre (2) pour éviter l'affaiblissement de sa résistance mécanique.

4. Étrier selon l'une quelconque des revendications précédentes, dans lequel le cadre d'étrier (2) est fait principalement ou complètement d'un matériau polymère.

5. Étrier selon l'une quelconque des revendications précédentes, dans lequel l'élément de support (42) délimite, par exemple en dessous, une rainure longitudinale (70) qui reçoit au moins une partie du bras de support (8).

6. Étrier selon l'une quelconque des revendications précédentes, dans lequel l'élément de support (42) est partiellement recouvert d'une feuille de couverture métallique (56), par exemple en acier, des portions d'accrochage (62) pliées vers l'extérieur de ladite feuille (56) étant au moins partiellement encastrées dans un matériau polymère (58) dont ledit élément de support (42) est fait au moins partiellement.

7. Étrier selon l'une quelconque des revendications précédentes, comprenant un second bras latéral (12) comprenant une extrémité d'articulation (14) montée à pivot sur le cadre d'étrier (2) autour d'un axe de rotation (R), et une extrémité libre (16) capable de tourner entre une configuration d'accrochage sur le bras de support (8) dans laquelle le second bras (12) entoure le compartiment de cadre (10) avec le premier bras latéral (6) et le bras de support (8), et une configuration de libération de ce dernier, dans laquelle ledit second bras (12) est espacé du bras de support (8) pour créer une ouverture latérale de dégagement (18) du pied de l'utilisateur hors dudit compartiment.

8. Étrier selon la revendication précédente, dans lequel le second bras latéral (12) comprend au moins une portion flexible (20) laquelle, dans la configuration d'accouplement pousse l'extrémité libre (16) en butée avec le bras de support (8) et laquelle, afin de réaliser la configuration de libération, permet au second bras latéral (12) de se courber partiellement, pour dégager par action de ressort l'extrémité libre (16) du bras de support (8), par exemple sous l'effet d'une contrainte dans une direction (S) opposée au premier bras latéral (6).

9. Étrier selon l'une quelconque des revendications précédentes en ce qu'elle dépend de la revendication 7, dans lequel un plan de ligne centrale (M) est détectable à travers le cadre d'étrier (2) entre le premier (6) et le second (12) bras latéral dans la configuration d'accrochage, l'axe de rotation (R) étant situé au niveau de la portion d'accrochage (4), décalé vers ledit second bras (12) à l'extérieur dudit plan (M).

10. Procédé d'assemblage d'un étrier (1) pour l'équitation selon l'une quelconque des revendications précédentes, comprenant les étapes de :
- la fourniture d'un cadre d'étrier (2) qui comprend une portion d'accrochage (4) à une étrivière (100), un premier bras latéral (6) et un bras de support (8) reliés l'un à l'autre de manière incidente pour définir un compartiment de cadre (10) avec lequel peut venir en prise le pied d'un utilisateur ;
- la fourniture d'un élément de support (42) pour le pied de l'utilisateur ;
- l'ajustement de l'élément de support (42) sur le bras de support (8) et l'accouplement par correspondance de forme dudit élément (42) avec un siège d'élément (44) dudit bras, le siège d'élément (44) étant délimité par une portion en contre-dépouille (46) ;
- le calage sur un côté d'une portion optionnellement tronconique (48) de l'élément de support (42) dans la portion en contre-dépouille (46) ;
- la retenue en force d'une autre portion (50) dudit élément (42) sur le bras de support (8) au moyen d'une ou plusieurs pièces de fixation mécaniques (52), par exemple comprenant une ou plusieurs vis, qui s'étendent à travers l'épaisseur du cadre d'étrier (2).

11. Procédé selon la revendication précédente, dans lequel l'étape de fourniture de l'élément de support (42) comprend une sous-étape de fourniture d'une feuille de couverture métallique (56) comprenant des portions d'accrochage (62), pliées vers l'extérieur, et une sous-étape d'incorporation d'au moins une partie des portions d'accrochage (62) dans un matériau polymère (58) dont ledit élément de support (42) est fait au moins partiellement.

12. Procédé selon la revendication précédente, dans lequel la sous-étape de fourniture d'une feuille de couverture métallique (56) comprend les étapes de découpage desdites portions d'accrochage (62) à partir de ladite feuille de couverture (56), et de pliage desdites portions (62) vers l'extérieur de la feuille.

13. Procédé selon l'une quelconque des revendications 10 à 12, comprenant les étapes de :
- la fourniture d'un second bras latéral (12) comprenant une extrémité d'articulation (14) et une extrémité libre (16) ;
- le pivotement de l'extrémité d'articulation (14) sur le cadre d'étrier (2) autour d'un axe de rotation (R), de sorte que l'extrémité libre (16) soit capable de tourner entre une configuration d'accrochage sur le bras de support (8) dans laquelle le second bras (12) entoure le compartiment de cadre (10) avec le premier bras latéral (6) et le bras de support (8), et une configuration de libération de ce dernier, dans laquelle ledit second bras (12) est espacé du bras de support (8) pour créer une ouverture latérale de dégagement (18) du pied de l'utilisateur hors dudit compartiment.
